# EUROPÄISCHE PATENTANMELDUNG

(11) **EP 4 459 827 A1**
(43) Veröffentlichungstag der Anmeldung: **06.11.2024**
(21) Anmeldenummer: 23171550.9
(22) Anmeldetag: 04.05.2023
(51) Int. Cl.: H02J 7/00, B60L 53/62

(54) **BATTERIEMANAGEMENTSYSTEM, LADESYSTEM, FLURFÖRDERZEUG UND VERFAHREN ZUM LADEN EINER TRAKTIONSBATTERIE EINES FLURFÖRDERZEUGS**

(71) Anmelder: Jungheinrich Aktiengesellschaft, 22047 Hamburg (DE)
(72) Erfinder: ALBRECHT, Clemens, 24558 Henstedt-Ulzburg (DE)
(74) Vertreter: Seemann & Partner Patentanwälte mbB

(57) **Zusammenfassung**

Die Erfindung betrifft ein Batteriemanagementsystem (4), ein Ladesystem (7), ein Flurförderzeug (2) und ein Verfahren zum Laden einer Traktionsbatterie (8) des Flurförderzeugs (2). Das Batteriemanagementsystem (4) umfasst einen Datenspeicher (6) und eine Verarbeitungseinheit (5). Die Verarbeitungseinheit (5) ist dazu eingerichtet, einen Nutzungsdatensatz zu erfassen und im Datenspeicher (6) abzuspeichern. Der Nutzungsdatensatz beschreibt eine Nutzung des Flurförderzeugs (2) während eines Arbeitszeitraums. Der Nutzungsdatensatz umfasst wenigstens einen Nutzungsparameter (40), der Aufschluss über Entladephasen und Ladephasen der Traktionsbatterie (8) während des Arbeitszeitraums gibt. Die Verarbeitungseinheit (5) ist ferner dazu eingerichtet, aus dem wenigstens einen Nutzungsparameter (40), insbesondere mittels eines künstlichen neuronalen Netzes (100), einen Ladevorgangsmodifikationsparameter (50) zu ermitteln. Während wenigstens eines Aufladevorgangs der Traktionsbatterie (8) wird wenigstens eine Ladevorgangskenngröße (55) basierend auf dem Ladevorgangsmodifikationsparameter (50) angepasst, wobei die wenigstens eine Ladevorgangskenngröße (55) eine Energieaufnahme der Traktionsbatterie (8) während des Aufladevorgangs kennzeichnet.

## Beschreibung

Die Erfindung betrifft ein Batteriemanagementsystem eines Flurförderzeugs. Ferner betrifft die Erfindung ein Ladesystem zum Laden einer Traktionsbatterie eines Flurförderzeugs, ein Flurförderzeug mit einer Traktionsbatterie sowie ein Verfahren zum Laden einer Traktionsbatterie eines Flurförderzeugs.

Flurförderzeuge werden in Warenlogistikeinrichtungen für unterschiedlichste Aufgaben eingesetzt. Zum Antrieb weisen Flurförderzeuge vielfach eine Traktionsbatterie auf, bei der es sich beispielsweise um eine Lithium-Ionen-Batterie handelt. Lithium-Ionen-Batterien haben gegenüber Blei-Säure-Batterien zum Beispiel den Vorteil, dass sie ein schnelles Zwischenladen während Standzeiten des Flurförderzeugs ermöglichen und damit Batteriewechsel überflüssig machen. Zudem entfallen Wartungsarbeiten zum Befüllen des Batteriewassers.

Um die Ladezeiten der Traktionsbatterien möglichst gering zu halten, werden diese während eines Aufladevorgangs mit einer festgelegten, maximal zulässigen Stromstärke geladen. Diese maximal zulässige Stromstärke ist notwendig, da es bei hohen Stromstärken zu einer starken Temperaturzunahme der Batteriezellen kommt, wodurch die Batterie beschädigt oder ihre Lebensdauer reduziert werden kann. Es ist daher bekannt, die Temperatur der Zellen zu überwachen und die Stromstärke zu reduzieren, wenn die Zellen zu warm werden und die Zelltemperatur eine Maximaltemperatur in Form einer ersten Temperaturschwelle überschreitet. Dennoch kommt es trotz der Einhaltung einer solchen Maximaltemperatur zu einem erheblichen Temperatureintrag in die Zellen, der sich negativ auf die Lebensdauer der Traktionsbatterie auswirkt.

Im Kontext der vorliegenden Beschreibung ist eine Traktionsbatterie diejenige Batterie, welche den Antrieb eines elektrisch betriebenen Flurförderzeugs mit Energie versorgt. Gemäß zukünftiger Batterieverordnungen werden Traktionsbatterien in Flurförderzeugen auch als Industriebatterien bezeichnet.

Die Aufgabe der Erfindung besteht darin, eine Lebensdauer von Traktionsbatterien von Flurförderzeugen zu erhöhen.

Diese Aufgabe wird gelöst durch ein Batteriemanagementsystem eines Flurförderzeugs, umfassend einen Datenspeicher und eine Verarbeitungseinheit, die dazu eingerichtet ist, einen Nutzungsdatensatz zu erfassen und im Datenspeicher abzuspeichern, wobei der Nutzungsdatensatz eine Nutzung des Flurförderzeugs während eines Arbeitszeitraums beschreibt, wobei der Nutzungsdatensatz wenigstens einen Nutzungsparameter umfasst, der Aufschluss über Entladephasen und Ladephasen der Traktionsbatterie während des Arbeitszeitraums gibt, wobei die Verarbeitungseinheit ferner dazu eingerichtet ist, aus dem wenigstens einen Nutzungsparameter einen Ladevorgangsmodifikationsparameter zu ermitteln und während wenigstens eines Aufladevorgangs der Traktionsbatterie wenigstens eine Ladevorgangskenngröße basierend auf dem Ladevorgangsmodifikationsparameter anzupassen, wobei die wenigstens eine Ladevorgangskenngröße eine Energieaufnahme der Traktionsbatterie während des Aufladevorgangs kennzeichnet.

Es wurde erkannt, dass beim Einsatz von Flurförderzeugen vielfach spezifische Arbeitsabläufe erfolgen, die sich in der Regel Tag für Tag wiederholen. Die Erfindung beruht auf der Erkenntnis, dass die Nutzung des Flurförderzeugs und damit die Lade- und Entladephasen der Traktionsbatterien stark von diesen sich wiederholenden Arbeitsabläufen abhängt. Durch Erfassung eines Nutzungsdatensatzes mit wenigstens einem Nutzungsparameter, der Aufschluss über Entladephasen und Ladephasen der Traktionsbatterie während des Arbeitszeitraums gibt, lässt sich ermitteln, zu welchen Zeiten wie viel Energie der Traktionsbatterie verbraucht wird und welche Zeitpunkte und Zeiträume für das Aufladen des Flurförderzeugs zur Verfügung stehen. Mittels dieses wenigstens einen Nutzungsparameters wird nun ein Ladevorgangsmodifikationsparameter ermittelt. Mit diesem Ladevorgangsmodifikationsparameter wird der Aufladevorgang der Traktionsbatterie optimiert, indem während des Aufladevorgangs wenigstens eine Ladevorgangskenngröße an die Nutzung des Flurförderzeugs angepasst wird. Beispielsweise kann durch die Steuerung der Ladevorgangskenngröße die für den Aufladevorgang zur Verfügung stehende Zeit optimal genutzt werden, um den Aufladevorgang schonender für die Traktionsbatterie zu gestalten.

Zur Erfassung des Nutzungsdatensatzes umfasst das Batteriemanagementsystem insbesondere wenigstens einen Sensor und/oder ist zum Empfang von Sensordaten von der Fahrzeugsteuerung und/oder von wenigstens einem Sensor eingerichtet. Der wenigstens eine Sensor ist beispielsweise an der Traktionsbatterie oder am Flurförderzeug angeordnet. Beispielsweise ist der Sensor ein Temperatursensor oder ein Sensor zur Erfassung eines Ladezustands der Traktionsbatterie.

Die Ladevorgangskenngröße ist eine Größe, die Parameter des Aufladevorgangs während des Aufladens beschreibt. Sie gibt beispielsweise an, wie schnell oder wie lange geladen wird. Der Zeitpunkt des Aufladevorgangs ist hingegen keine Aufladevorgangskenngröße, da dies kein Parameter ist, der den Aufladevorgang während des Aufladens beeinflusst.

Um die Ladevorgangskenngröße anzupassen, ist die Verarbeitungseinheit insbesondere dazu eingerichtet, ein Steuersignal zu erzeugen und bereitzustellen. Das Steuersignal umfasst insbesondere Steuerbefehle, die ein Ladegerät dazu veranlassen, die Ladevorgangskenngröße anzupassen, wenn das Steuersignal an das Ladegerät übermittelt wird. Insbesondere ist die Verarbeitungseinheit dazu eingerichtet, das Steuersignal über ein Datenkabel, das insbesondere in einem Ladekabel geführt ist, per Funk oder über einen anderen Kommunikationsweg an das Ladegerät zu übermitteln.

Das Batteriemanagementsystem ist insbesondere als Teil einer Fahrzeugsteuerung des Flurförderzeugs oder separat zur Steuerung des Flurförderzeugs ausgebildet. Gemäß einer Ausführungsform ist das Batteriemanagementsystem als Bestandteil der Traktionsbatterie ausgestaltet oder an der Traktionsbatterie fixierbar. Die Verarbeitungseinheit ist insbesondere ein Computer oder eine andere Datenverarbeitungsvorrichtung. Der Arbeitszeitraum ist insbesondere ein Arbeitstag, eine Arbeitswoche, ein Arbeitsmonat oder ein ähnlicher, sich wiederholender Zeitraum, wie beispielsweise eine Arbeitsschicht.

Vorzugsweise umfasst die Ladevorgangskenngröße einen maximalen Stromstärkenwert eines Ladestroms während des Aufladevorgangs und/oder eine Ladedauer des Aufladevorgangs. Es wurde erkannt, dass es nicht immer sinnvoll ist, die Traktionsbatterie mit der maximal zulässigen Stromstärke aufzuladen, auch wenn die Maximaltemperatur der Batteriezellen noch nicht erreicht ist, da auch Temperaturen unterhalb der Maximaltemperatur zum Temperatureintrag der Zellen beitragen und die Lebensdauer reduzieren. Um dennoch eine ausreichende Aufladung der Traktionsbatterie zu erreichen, muss ermittelt werden, welche Stromstärke für den jeweiligen Aufladevorgang optimal ist.

Beispielsweise wird aus dem Nutzungsdatensatz ermittelt, dass jeden Arbeitstag um die gleiche Zeit eine Stunde Mittagspause vorgesehen ist, während der das Flurförderzeug nicht genutzt wird und aufgeladen werden kann. Häufig wird jedoch bei maximal zulässiger Stromstärke nicht die volle Stunde zur vollständigen Aufladung der Traktionsbatterie benötigt, sondern beispielsweise nur dreißig Minuten. In diesem Fall findet in den ersten dreißig Minuten eine Aufladung mit maximal zulässiger Stromstärke und in den letzten dreißig Minuten überhaupt kein Aufladevorgang statt. Dies führt zu einem unnötigen Temperatureintrag in die Batteriezellen, wodurch sich eine Alterung der Traktionsbatterie beschleunigt. Um dies zu vermeiden wird beispielsweise der maximale Stromstärkenwert des Ladestroms halbiert und die Aufladedauer verdoppelt, so dass die Mittagspause deutlich besser genutzt werden kann. Auf diese Weise wird die Traktionsbatterie während des Aufladevorgangs geschont. Zudem kommt es zu einer erheblichen Einsparung von Strom und damit einer Reduzierung der CO₂-Belastung, einer Reduzierung der Stromlastspitzen in der Warenlogistikeinrichtung und eine Reduzierung des Verschleißes von Komponenten, z. B. von Steckerkontakten.

Ebenso kann aus dem Nutzungsdatensatz ermittelt werden, dass beispielsweise zwei Stunden vor Feierabend jeden Arbeitstag eine halbe Stunde pausiert wird. Diese dreißig Minuten reichen zwar aus, um die Traktionsbatterie vollständig zu laden, jedoch wird erkannt, dass eine vollständig geladene Traktionsbatterie für die am Arbeitstag durchzuführenden restlichen Arbeitsvorgänge überhaupt nicht mehr benötigt wird. In diesem Fall kann während der halben Stunde der maximale Stromstärkenwert bei gleichbleibender Ladedauer reduziert werden, unter Umständen sogar auf null, um die Traktionsbatterie zu schonen. Da keine vollständige Batterieladung für die restlichen Arbeitsvorgänge benötigt wird, muss die Traktionsbatterie auch nicht mehr vollständig geladen werden. Eine vollständige Ladung der Traktionsbatterie geschieht in diesem Fall nach Ende des Arbeitstags, insbesondere wiederum mit deutlich reduzierter maximaler Stromstärke.

Bevorzug umfasst der wenigstens eine Nutzungsparameter eine Zeitdauer von Betriebszeiten, während denen die Traktionsbatterie entladen wird, und eine Zeitdauer von Standzeiten, während denen die Traktionsbatterie nicht entladen wird, wobei der wenigstens eine Nutzungsparameter insbesondere Anfangszeiten und Endzeiten der Betriebszeiten und/oder Standzeiten umfasst.

Insbesondere umfasst der wenigstens eine Nutzungsparameter die gesamte Zeitdauer der Betriebszeiten und Standzeiten während des Arbeitszeitraums. Die Betriebszeiten sind beispielsweise die Zeiträume während des Arbeitszeitraums, während dem das Flurförderzeug zur Ausführung von Arbeiten genutzt und auf diese Weise die Traktionsbatterie beansprucht wird. Die Standzeiten sind beispielsweise Pausen, während denen das Flurförderzeug nicht genutzt wird und die Traktionsbatterie insbesondere nicht beansprucht wird. Insbesondere umfasst wenigstens eine der Standzeiten den wenigstens einen Aufladevorgang. Das Flurförderzeug wird insbesondere in wenigstens einer der Standzeiten und nach Ende des Arbeitszeitraums, beispielsweise nach Ende des Arbeitstags, aufgeladen. Die genaue Kenntnis der Betriebszeiten und Standzeiten ermöglicht es, die wenigstens eine Ladevorgangskenngröße während des wenigstens einen Aufladevorgangs optimal an die Nutzung des Flurförderzeugs anzupassen.

Vorzugsweise umfasst der wenigstens eine Nutzungsparameter eine Zelltemperatur, die wenigstens eine Zelle der Traktionsbatterie während des Aufladevorgangs aufweist. Die Kenntnis der Zelltemperatur oder der Zelltemperaturen der Traktionsbatterie ermöglicht es, die Ladevorgangskenngröße während des Aufladevorgangs so anzupassen, dass die Zelltemperatur möglichst gering gehalten wird. Auf diese Weise lässt sich eine Alterung der Traktionsbatterie weiter reduzieren.

Bevorzugt ist für die wenigstens eine Zelle eine erste Temperaturschwelle im Datenspeicher hinterlegt, die die wenigstens eine Zelle während des Aufladevorgangs nicht überschreiten darf, wobei die Verarbeitungseinheit dazu eingerichtet ist, durch Anpassung der Ladevorgangskenngröße während des Aufladevorgangs die Zelletemperatur auf eine zweite Temperaturschwelle unterhalb der ersten Temperaturschwelle zu regeln. Die erste Temperaturschwelle gibt die zulässige Maximaltemperatur der Zellen an. Das Regeln der Zelltemperatur auf eine zweite Temperaturschwelle unterhalb der ersten Temperaturschwelle beruht auf der Erkenntnis, dass die Lebensdauer der Traktionsbatterie auch dann reduziert wird, wenn die Maximaltemperatur gemäß der ersten Temperaturschwelle nicht erreicht wird. Es ist daher vorteilhaft, die Zelltemperatur während des Aufladevorgangs möglichst gering zu halten, um die Lebensdauer der Traktionsbatterie zu erhöhen.

Vorzugsweise umfasst der wenigstens eine Nutzungsparameter einen oder mehrere der folgenden Parameter:
- einen Energiedurchsatz der Traktionsbatterie,
- einen Leistungsverbrauch des Flurförderzeugs,
- eine Umgebungstemperatur um das Flurförderzeug,
- maximale, für die Traktionsbatterie vorgegebene, Stromwerte,
- eine Kapazität der Traktionsbatterie,
- einen Kennwert für einen Alterungszustand der Traktionsbatterie,
- einen Kennwert für den Ladezustand der Traktionsbatterie während des Arbeitszeitraums,
- einen Kennwert für den Ladezustand der Traktionsbatterie nach Ende des Arbeitszeitraums.

All diese Nutzungsparameter beschreiben die Nutzung des Flurförderzeugs und geben zumindest indirekt Aufschluss über die Entladeund Ladephasen der Traktionsbatterie, so dass die Berücksichtigung dieser Nutzungsparameter bei der Ermittlung des Ladevorgangsmodifikationsparameters eine verbesserte Anpassung der Ladevorgangskenngröße ermöglicht.

Gemäß einer Ausführungsform umfasst der Nutzungsdatensatz mehrere Nutzungsparameter, wobei die Verarbeitungseinheit dazu eingerichtet ist, bei der Ermittlung des Ladevorgangsmodifikationsparameters den Nutzungsparametern unterschiedliche Gewichtungsstufen zuzuordnen. Nutzungsparameter mit höheren Gewichtungsstufen werden bei der Ermittlung des Ladevorgangsmodifikationsparameters stärker berücksichtigt als Nutzungsparameter mit einer geringen Gewichtungsstufe. Insbesondere ist die Verarbeitungseinheit dazu eingerichtet, den Zeitdauern der Betriebszeiten und der Standzeiten, sowie insbesondere der Anfangszeiten und Endzeiten der Betriebszeiten und/oder der Standzeiten, eine höchste Gewichtungsstufe bei der Ermittlung des Ladevorgangsmodifikationsparameters zuzuordnen. Ferner insbesondere ist die Verarbeitungseinheit dazu eingerichtet, der Zelltemperatur eine zweithöchste Gewichtungsstufe bei der Ermittlung des Ladevorgangsmodifikationsparameters zuzuordnen.

Vorzugsweise ist die Verarbeitungseinheit dazu eingerichtet, bei der Ermittlung des Ladevorgangsmodifikationsparameters einen gesamten Energiedurchsatz von wenigstens zwei Flurförderzeugen während des Arbeitszeitraums als Nutzungsparameter zu berücksichtigen, wobei die wenigstens zwei Flurförderzeuge das Flurförderzeug umfassen. Das Flurförderzeug ist insbesondere Teil einer Flotte von wenigstens zwei Flurförderzeugen innerhalb einer Warenlogistikeinrichtung. Die Berücksichtigung des Energiedurchsatzes aller Flurförderzeuge innerhalb der Flotte hat den Vorteil, dass ein unnötiges Aufladen von ungenutzten Flurförderzeugen vermieden wird. Bei mehreren Flurförderzeugen mit der gleichen Funktionalität ist es für einen Nutzer in der Regel nicht von Bedeutung, welches dieser Flurförderzeuge er zur Erledigung der anfallenden Arbeiten benutzt. Sofern ermittelt wird, dass zu bestimmten Zeiträumen während des Arbeitszeitraums, beispielsweise am Ende eines Arbeitstages, nicht mehr sämtliche Flurförderzeuge der Flotte genutzt werden, kann auf ein vollständiges Aufladen sämtlicher Flurförderzeuge verzichtet werden. Stattdessen werden nur so viele Flurförderzeuge aufgeladen, wie tatsächlich im restlichen Arbeitszeitraum benötigt werden. Auf diese Weise wird die Lebensdauer der Traktionsbatterien geschont, Strom und damit CO₂ eingespart, Stromlastspitzen in der Warenlogistikeinrichtung vermieden und Verschleiß von Komponenten, wie z.B. Steckerkontakten, reduziert.

Um die Nutzungsparameter betreffend den Energiedurchsatz von anderen Flurförderzeugen an die Verarbeitungseinheit zu übermitteln, wird insbesondere ein internes Netzwerk in der Warenlogistikeinrichtung genutzt. Insbesondere sind die Flurförderzeuge zur direkten Kommunikation untereinander und/oder mit dem internen Netzwerk ausgebildet. Gemäß einer anderen Ausführungsform werden die Nutzungsparameter über den gesamten Energiedurchsatz in einer Datencloud hinterlegt und aus dieser abgerufen.

Insbesondere ist die Verarbeitungseinheit dazu eingerichtet, die Ladevorgangskenngröße während des Aufladevorgangs auf einen Maximalwert zu setzen, sofern kein sich in mehreren Arbeitszeiträumen wiederholendes Nutzungsverhalten des Flurförderzeugs erfasst werden kann. Bei chaotischen Arbeitsabläufen kann durch die Auswertung des Nutzungsdatensatzes nicht vorhergesehen werden, wie viel Zeit für das Aufladen zur Verfügung steht und zu welchen Zeitpunkten ein Aufladen möglich ist. In diesem Fall wird insbesondere mit der maximal zulässigen Stromstärke für die maximal mögliche Zeitdauer geladen, um die Einsatzbereitschaft des Flurförderzeugs sicherzustellen.

Insbesondere ist die Verarbeitungseinheit dazu eingerichtet, während eines ersten Arbeitszeitraums die Ladungsvorgangskenngröße auf einen Maximalwert zu setzen, wobei nach dem ersten Arbeitszeitraum der Ladevorgangsmodifikationsparameter für nachfolgende Arbeitszeiträume schrittweise geändert wird, um die Ladevorgangsgröße anzupassen, bis eine Energieaufnahme der Traktionsbatterie während aller Aufladevorgänge des nachfolgenden Arbeitszeitraums an das Nutzungsverhalten des Flurförderzeugs angepasst ist. Mit anderen Worten, wird die Ladevorgangsgröße iterativ an die Nutzung des Flurförderzeugs während des Arbeitszeitraums angepasst. Dies geschieht insbesondere in vergleichsweise kleinen Änderungen der Ladevorgangskenngröße. Auf diese Weise wird ein Ausfall der Flurförderzeuge durch eine leere Traktionsbatterie vermieden.

Vorzugsweise ist die Verarbeitungseinheit dazu eingerichtet, den Ladevorgangsmodifikationsparameter aus dem wenigstens einen Nutzungsparameter mittels eines künstlichen neuronalen Netzes zu ermitteln, wobei das künstliche neuronale Netz darauf trainiert ist, den wenigstens einen Nutzungsparameter als Eingabegröße zu empfangen und den Ladevorgangsmodifikationsparameter als Ausgabegröße auszugeben. Das künstliche neuronale Netz ist insbesondere auf dem Datenspeicher gespeichert. Insbesondere ist das künstliche neuronale Netz darauf trainiert, aus dem wenigstens einen Nutzungsparameter als Eingabegröße einen Ladevorgangsmodifikationsparameter als Ausgabe zu ermitteln, der die Ladevorgangskenngröße an die Nutzung des Flurförderzeugs während des Arbeitszeitraums anpasst. Ein künstliches neuronales Netz, das auf diese Weise trainiert ist, kann die Ladevorgangskenngröße während des wenigstens einen Aufladevorgangs besonders genau an die Nutzung des Flurförderzeugs anpassen.

Die Aufgabe wird ferner gelöst durch ein Ladesystem zum Laden einer Traktionsbatterie eines Flurförderzeugs, umfassend ein Batteriemanagementsystem nach einer der zuvor dargestellten Ausführungsformen und ein Ladegerät. Ferner umfasst das Ladesystem insbesondere die Traktionsbatterie.

Zudem wird die Aufgabe gelöst durch ein Flurförderzeug mit einer Traktionsbatterie umfassend ein Batteriemanagementsystem nach einer der zuvor dargelegten Ausführungsformen.

Das Ladesystem und das Flurförderzeug verkörpern jeweils die gleichen Vorteile, Merkmale und Eigenschaften wie das zuvor beschriebene Batteriemanagementsystem. Es kann vorgesehen sein, das Batteriemanagementsystem als Teil eines Ladesystems zu implementieren, das neben dem Batteriemanagementsystem auch das Ladegerät umfasst, um auf diese Weise den Ladevorgang zu optimieren. Ebenso kann es vorgesehen sein, das Batteriemanagementsystem als Teil der Traktionsbatterie des Flurförderzeugs zu implementieren.

Vorzugsweise umfasst die Traktionsbatterie eine Lithium-Ionen-Batterie. Beispielsweise ist die Traktionsbatterie eine Lithium-Ionen-Batterie. Lithium-Ionen-Batterien sind vorteilhaft, da sie besonders schnell aufgeladen werden können und keine Wartungsarbeiten zum Befüllen mit Batteriewasser erfordern. Insbesondere ist die Lithium-Ionen-Batterie fest in das Flurförderzeug eingebaut. Die Lithium-Ionen-Batterie umfasst insbesondere kein Schnellwechselsystem. Ein Schnellwechselsystem ist nicht erforderlich, da während des Arbeitszeitraums mittels des Batteriemanagementsystems die Standzeiten optimal zum Aufladen genutzt werden, so dass stets genügend Energie zum Betrieb des Flurförderzeugs zur Verfügung steht.

Schließlich wird die Aufgabe gelöst durch ein Verfahren zum Laden einer Traktionsbatterie eines Flurförderzeugs, umfassend die folgenden Schritte:
- Erfassen eines Nutzungsdatensatzes und Speichern des Nutzungsdatensatzes in einem Datenspeicher des Flurförderzeugs, wobei der Nutzungsdatensatz eine Nutzung des Flurförderzeugs während eines Arbeitszeitraums beschreibt, wobei der Nutzungsdatensatz wenigstens einen Nutzungsparameter umfasst, der Aufschluss über Entladephasen und Ladephasen der Traktionsbatterie während des Arbeitszeitraums gibt,
- Ermitteln eines Ladevorgangsmodifikationsparameters aus dem wenigstens einen Nutzungsparameter,
- Anpassen von wenigstens einer Ladevorgangskenngröße basierend auf dem Ladevorgangsmodifikationsparameter während wenigstens eines Aufladevorgangs der Traktionsbatterie, wobei die wenigstens eine Ladevorgangskenngröße eine Energieaufnahme der Traktionsbatterie während des Aufladevorgangs kennzeichnet.

Das Verfahren zum Laden einer Traktionsbatterie eines Flurförderzeugs verkörpert die gleichen Vorteile, Merkmale und Eigenschaften wie das zuvor beschriebene Batteriemanagementsystem, das zuvor beschriebene Ladesystem und das zuvor beschriebene Flurförderzeug.

Insbesondere ist das zuvor dargelegte Batteriesystem dazu eingerichtet, das Verfahren zum Laden der Traktionsbatterie des Flurförderzeugs auszuführen.

Vorzugsweise umfasst die Ladevorgangskenngröße einen maximalen Stromstärkenwert eines Ladestroms und/oder eine Ladedauer des Aufladevorgangs.

Bevorzugt umfasst der wenigstens eine Nutzungsparameter eine Zeitdauer von Betriebszeiten, während denen die Traktionsbatterie entladen wird, und eine Zeitdauer von Standzeiten, während denen die Traktionsbatterie nicht entladen wird, wobei der wenigstens eine Nutzungsparameter insbesondere Anfangszeiten und Endzeiten der Betriebszeiten und/oder Standzeiten umfasst.

Der wenigstens eine Nutzungsparameter umfasst vorzugsweise eine Zelltemperatur, die wenigstens eine Zelle der Traktionsbatterie während des Aufladevorgangs aufweist.

Bevorzugt ist für die wenigstens eine Zelle eine erste Temperaturschwelle hinterlegt, die die wenigstens eine Zelle während des Aufladevorgangs nicht überschreiten darf, wobei durch Anpassung der Ladevorgangskenngröße während des Aufladevorgangs die Zelletemperatur auf eine zweite Temperaturschwelle unterhalb der ersten Temperaturschwelle geregelt wird.

Der wenigstens eine Nutzungsparameter umfasst bevorzugt einen oder mehrere der folgenden Parameter:
- einen Energiedurchsatz der Traktionsbatterie,
- einen Leistungsverbrauch des Flurförderzeugs,
- eine Umgebungstemperatur um das Flurförderzeug,
- maximale, für die Traktionsbatterie vorgegebene, Stromwerte,
- eine Kapazität der Traktionsbatterie,
- einen Kennwert für einen Alterungszustand der Traktionsbatterie,
- einen Kennwert für den Ladezustand der Traktionsbatterie während des Arbeitszeitraums,
- einen Kennwert für den Ladezustand der Traktionsbatterie nach Ende des Arbeitszeitraums.

Gemäß einer Ausführungsform umfasst der Nutzungsdatensatz mehrere Nutzungsparameter, wobei bei der Ermittlung des Ladevorgangsmodifikationsparameters den Nutzungsparametern unterschiedliche Gewichtungsstufen zugeordnet werden.

Den Zeitdauern der Betriebszeiten und der Standzeiten sowie insbesondere der Anfangszeiten und Endzeiten der Betriebszeiten und/ oder der Standzeiten, werden bevorzugt eine höchste Gewichtungsstufe bei der Ermittlung des Ladevorgangsmodifikationsparameters zugeordnet.

Der Zelltemperatur wird bevorzugt eine zweithöchste Gewichtungsstufe bei der Ermittlung des Ladevorgangsmodifikationsparameters zugeordnet.

Vorzugsweise wird bei der Ermittlung des Ladevorgangsmodifikationsparameters ein gesamter Energiedurchsatz von wenigstens zwei Flurförderzeugen während des Arbeitszeitraums als Nutzungsparameter berücksichtigt, wobei die wenigstens zwei Flurförderzeuge das Flurförderzeug umfassen.

Vorzugsweise wird die Ladevorgangskenngröße während des Aufladevorgangs auf einen Maximalwert gesetzt, sofern kein sich in mehreren Arbeitszeiträumen wiederholendes Nutzungsverhalten des Flurförderzeugs erfasst werden kann.

Bevorzugt wird während eines ersten Arbeitszeitraums die Ladevorgangskenngröße auf einen Maximalwert gesetzt, wobei nach dem ersten Arbeitszeitraum der Ladevorgangsmodifikationsparameter für nachfolgende Arbeitszeiträume schrittweise geändert wird, um die Ladevorgangskenngröße anzupassen, bis eine Energieaufnahme der Traktionsbatterie während aller Aufladevorgänge des nachfolgenden Arbeitszeitraums an das Nutzungsverhalten des Flurförderzeugs angepasst ist.

Gemäß einer Ausführungsform wird der Ladevorgangsmodifikationsparameter aus dem wenigstens einen Nutzungsparameter mittels eines künstlichen neuronalen Netzes ermittelt, wobei das künstliche neuronale Netz darauf trainiert ist, den wenigstens einen Nutzungsparameter als Eingabegröße zu empfangen und den Ladevorgangsmodifikationsparameter als Ausgabegröße auszugeben.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Darstellung eines Flurförderzeugs, dessen Traktionsbatterie mittels eines Ladegeräts aufgeladen wird,
- Fig. 2a-2f: eine schematisch vereinfachte Darstellung von Graphen, die eine Anpassung eines maximalen Stromstärkewerts und einer Ladedauer in nachfolgenden Arbeitszeiträumen zeigen,
- Fig. 3a-3c: eine schematisch vereinfachte Darstellung von Graphen, die eine Anpassung des maximalen Stromstärkewerts und der Ladedauer in Reaktion auf eine Verkürzung einer Standzeit zeigen, und
- Fig. 4: eine schematisch vereinfachte Darstellung eines künstlichen neuronalen Netzes zur Ermittlung eines Ladevorgangsmodifikationsparameters aus Nutzungsparametern des Flurförderzeugs.

In den Zeichnungen sind jeweils gleiche oder gleichartige Elemente und/oder Teile mit denselben Bezugsziffern versehen, so dass von einer erneuten Vorstellung jeweils abgesehen wird.

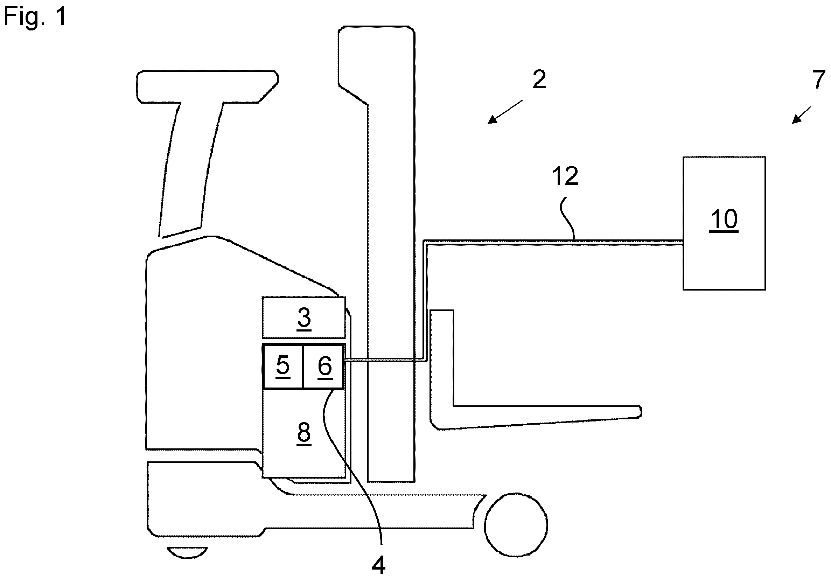

Fig. 1 zeigt schematisch vereinfacht ein Flurförderzeug 2, das eine Fahrzeugsteuerung 3 und eine Traktionsbatterie 8 mit einem Batteriemanagementsystem 4 umfasst. In der dargestellten Ausführungsform ist das Batteriemanagementsystem 4 ein Bestandteil der Traktionsbatterie 8. Das Batteriemanagementsystem 4 umfasst eine Verarbeitungseinheit 5, beispielsweise einen Computer oder eine ähnliche Datenverarbeitungsvorrichtung, und einen Datenspeicher 6. Über ein Ladekabel 12 ist das Flurförderzeug 2 mit einem Ladegerät 10 verbunden, während es aufgeladen werden soll. Vielfach umfassen die Ladekabel 12 auch Datenkabel, mit denen Signale vom Flurförderzeug 2 an das Ladegerät 10 und umgekehrt übermittelt werden können. Die Datenübertragung zwischen dem Flurförderzeug 2 und dem Ladegerät 10 kann ebenso per Funk oder über eine andere Datenübertragungstechnik erfolgen. Das Batteriemanagementsystem 4 kann als Teil des Flurförderzeugs 2 oder als Teil eines Ladesystems 7 ausgebildet sein, welches das Batteriemanagementsystem 4, die Traktionsbatterie 8 und das Ladegerät 10 umfasst.

Beim Einsatz des Flurförderzeugs 2 in einer Warenlogistikeinrichtung kommt es während eines Arbeitstages fast immer zu Standzeiten, z. B. während der Mittagspause oder am Ende der Schicht, also beispielsweise während der Nachtzeiten. Diese Standzeiten können genutzt werden, um die Traktionsbatterie 8 mittels des Ladegeräts 10 aufzuladen. Um die Ladezeiten möglichst kurz zu halten, wird eine Stromstärke des Ladestroms für gewöhnlich auf einen maximal zulässigen Wert gesetzt. Erst bei Erreichen einer kritischen Maximaltemperatur innerhalb der Traktionsbatterie 8 wird die Stromstärke für gewöhnlich abgesenkt, um eine Beschädigung der Traktionsbatterie 8 zu vermeiden. Bei diesem Vorgehen wird jedoch immer noch ein hoher Temperatureintrag in die Traktionsbatterie 8 vorgenommen, der die Lebensdauer der Traktionsbatterie 8 reduziert. Gerade bei Lithium-Ionen-Batterien, die für schnelle Ladevorgänge besonders geeignet sind, kommt es auf diese Weise zu beträchtlichen Alterungsvorgängen der Traktionsbatterie 8.

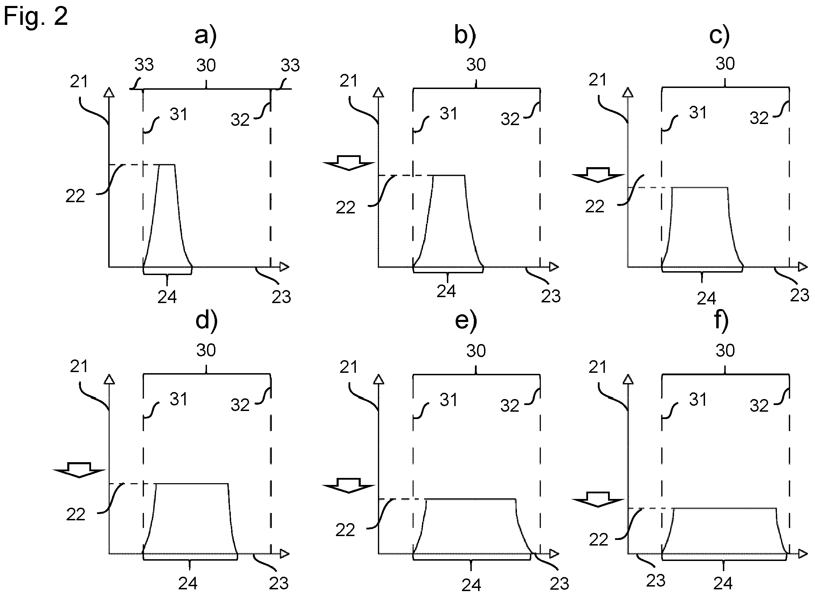

Um dieses Problem zu lösen wird während der Nutzung des Flurförderzeugs 2 während eines Arbeitszeitraums, beispielsweise eines Arbeitstags, wenigstens ein Nutzungsparameter erfasst und als Nutzungsdatensatz im Datenspeicher 6 hinterlegt. Dieser Nutzungsparameter gibt Aufschluss über Entladephasen und Ladephasen der Traktionsbatterie 8. Dies ist beispielhaft in Fig. 2a dargestellt. Fig. 2a zeigt einen Graphen, in dem eine Stromstärke 21 eines Ladestroms gegen die Zeit 23 aufgetragen ist. Dargestellt sind für einen ersten Arbeitstag zwei Betriebszeiten 33, zwischen denen eine Standzeit 30 des Flurförderzeugs 2 erfolgt. In den Betriebszeiten 33 wird das Flurförderzeug 2 beispielsweise für Arbeiten genutzt, die die Traktionsbatterie 8 entladen. Bei der Standzeit 30 handelt es sich beispielsweise um eine Mittagspause mit einer Anfangszeit 31 und einer Endzeit 32, die durch gestrichelte Linien dargestellt sind. Bei Beginn der Standzeit 30, also bei der Anfangszeit 31, wird die Traktionsbatterie 8 an das Ladegerät 10 angeschlossen, um die Traktionsbatterie 8 aufzuladen. Die Stromstärke 21 wird hochgefahren, bis sie einen maximalen Stromstärkewert 22 erreicht, den sie beibehält, bis die Traktionsbatterie 8 vollständig geladen ist. Anschließend wird die Stromstärke 21 wieder reduziert. Die Ladedauer 24 des Aufladevorgangs an dem in Fig. 2a dargestellten ersten Tag ist jedoch deutlich kürzer als die Standzeit 30. Mit anderen Worten ist mit dem maximalen Stromstärkewert 22 für die vollständige Ladung der Traktionsbatterie 8 deutlich weniger Zeit notwendig als in der Standzeit 30 zur Verfügung steht.

Um die zur Verfügung stehende Zeit besser zu nutzen, wird während der Mittagspause eines zweiten Arbeitstags, der in Fig. 2b dargestellt ist, der maximale Stromstärkenwert 22 etwas reduziert. Dies ist in Fig. 2b durch einen nach unten zeigenden Pfeil angedeutet. Infolgedessen verlängert sich die Ladedauer 24 bis zur vollständigen Aufladung der Traktionsbatterie 8, erreicht in Fig. 2b jedoch noch nicht die Dauer der Standzeit 30. Daher wird in den nachfolgenden Tagen, also dem dritten Tag in Fig. 2c, dem vierten Tag in Fig. 2d, dem fünften Tag in Fig. 2e und dem sechsten Tag in Fig. 2f, der maximale Stromstärkenwert 22 schrittweise weiter reduziert, bis die Ladedauer 24 der Dauer der Standzeit 30 entspricht.

Es wird somit die Kenntnis der jeden Tag zur gleichen Zeit und für die gleiche Dauer stattfindenden Mittagspause genutzt, um den Aufladevorgang der Traktionsbatterie 8 zu optimieren. Durch Absenkung des maximalen Stromstärkenwerts 22 wird eine Zelltemperatur der Traktionsbatterie 8 während des Aufladevorgangs deutlich weniger angehoben, als dies bei einer maximal zulässigen Stromstärke der Fall wäre. Dies führt zu einer deutlichen Erhöhung der Lebensdauer der Traktionsbatterie 8.

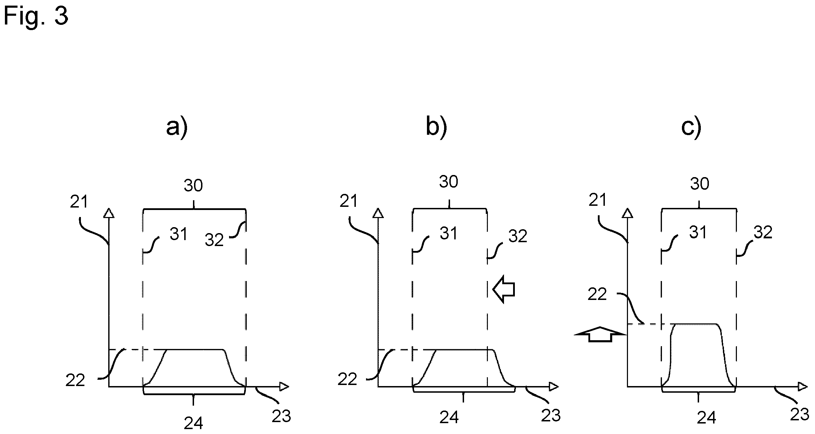

Fig. 3a zeigt einen Fall, bei dem die Ladedauer 24 des Aufladevorgangs bereits an eine Dauer einer Standzeit 30 angepasst wurde. An einem nachfolgenden Arbeitstag wird jedoch, wie in Fig. 3b gezeigt, die Dauer der Standzeit 30 plötzlich reduziert. Infolge dessen reicht die Standzeit 30 nicht länger aus, um die Traktionsbatterie 8 vollständig aufzuladen. Infolgedessen hat die Traktionsbatterie 8 in der darauffolgenden Betriebszeit 33 entweder eine zu geringe Ladung oder der Beginn der Arbeitsabläufe muss sich bis zum Abschluss des Aufladevorgangs verzögern. Um dies zu vermeiden wird am dritten Tag, der in Fig. 3c gezeigt ist, der maximale Stromstärkenwert 22 etwas angehoben, um die Ladedauer 24 zu verkürzen und auf die Dauer der Standzeit 30 anzupassen.

Ebenso kann es möglich sein, eine unvollständige Aufladung der Traktionsbatterie 8 durch Absenken des maximalen Stromstärkenwerts 22 bewusst in Kauf zu nehmen, wenn aus dem Nutzungsdatensatz hervorgeht, dass für die restlichen Arbeitsabläufe an dem Arbeitstag keine vollständige Aufladung der Traktionsbatterie 8 mehr erforderlich ist. Sofern eine Flotte von mehreren Flurförderzeugen 2 vorgesehen ist, kann zudem ein kombinierter Energiedurchsatz bzw. gesamter Energiedurchsatz der Flurförderzeuge 2 berücksichtigt werden. Werden beispielsweise von drei zur Verfügung stehenden Flurförderzeugen 2 in einem letzten Abschnitt des Arbeitstags regelmäßig nur zwei Flurförderzeuge 2 benötigt, so kann auf eine vollständige Aufladung der Traktionsbatterie 8 des dritten Flurförderzeugs 2 verzichtet werden.

Ferner kann eine Summe der Ladeströme der in einer Logistikeinrichtung vorhandenen Ladegeräte 10, welche gleichzeitig einen Aufladevorgang einer Traktionsbatterie 8 eines Flurförderzeugs 2 vornehmen, berücksichtigt werden. Durch die Auswertung einer solchen kombinierten Ladestromstärke mehrerer Ladegeräte 10 kann eine Überlastung des Stromversorgungssystems der Logistikeinrichtung vermieden werden. Um in einem solchen Anwendungsfall die im Versorgungsnetz der Logistikeinrichtung oder in einzelnen Stromversorgungskreisen anfallende Stromstärke unterhalb eines kritischen Werts zu halten, kann der Ladevorgang angepasst werden. Beispielsweise kann je nach Nutzung der Fahrzeugflotte entweder eine maximale zur Verfügung stehende Ladestromstärke auf alle Flurförderzeuge 2 in der Logistikeinrichtung oder in dem entsprechenden Versorgungskreis aufgeteilt werden oder, wenn nicht aller Flurförderzeuge 2 benötigt werden, auf eine festgelegte oder erlernte Anzahl von Flurförderzeugen 2, die zu dem betreffenden Zeitpunkt jeweils benötigt werden, begrenzt werden.

Ferner kann vorgesehen sein, dass das Flurförderzeug 2 eine Eingabeeinheit umfasst, beispielsweise eine berührungssensitive Anzeige oder dergleichen, die eine manuelle Benutzereingabe erlaubt. Durch eine solche Benutzereingabe können beispielsweise im System hinterlegte Parameter abgefragt und geändert werden. Außerdem können beispielsweise benutzerseitig geforderte Ladeschwellen oder Ladegrenzen oder auch minimale oder maximale Ladeströme festgelegt werden.

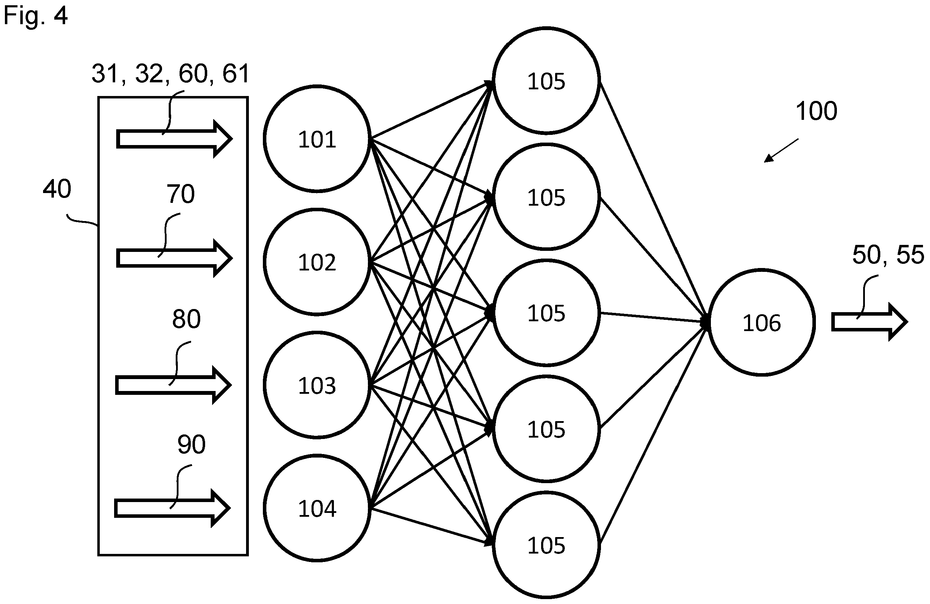

Um aus dem wenigstens einen Nutzungsparameter zu ermitteln, auf welche Weise die Stromstärke 21 und/oder die Ladedauer 24 angepasst werden sollten, wird beispielsweise ein künstliches neuronales Netz 100 genutzt, wie es in Fig. 4 dargestellt ist. Die Nutzungsparameter 40 werden dem neuronalen Netz 100 als Eingangsgrößen zur Verfügung gestellt. Die Nutzungsparameter 40 umfassen beispielsweise die Anfangszeit 31 und die Endzeit 32 der Standzeiten 30 und Betriebszeiten 33, die Dauer 60 der Betriebszeiten 33 und die Dauer 61 der Standzeiten 30, die einem ersten Eingangsknoten 101 zugeführt werden. Einem zweiten Eingangsknoten 102 wird beispielsweise die Zelltemperatur 70 der Zelle bzw. der Zellen der Traktionsbatterie 8 zugeführt. Einem dritten Eingangsknoten 103 wird beispielsweise ein Energiedurchsatz 80 des Flurförderzeugs 2 während eines Arbeitstages zur Verfügung gestellt. Schließlich wird einem vierten Eingangsknoten 104 eine Reihe zusätzlicher Nutzungsparameter 90 zur Verfügung gestellt, bei dem es sich beispielsweise um einen Leistungsverbrauch des Flurförderzeugs 2, eine Umgebungstemperatur um das Flurförderzeug 2, maximale für die Traktionsbatterie 8 vorgegebene Stromwerte, eine Kapazität der Traktionsbatterie 8, einen Kennwert für einen Alterungszustand der Traktionsbatterie 8, einen Kennwert für den Ladezustand der Traktionsbatterie 8 während des Arbeitszeitraums und/oder einen Kennwert für den Ladezustand der Traktionsbatterie 8 nach Ende des Arbeitszeitraums handelt.

Den Eingangsknoten 101, 102, 103, 104 können verschiedene Gewichtungen zugeordnet werden. Beispielsweise wird dem Eingangsknoten 101 eine höchste Gewichtungsstufe und dem Eingangsknoten 102 eine zweithöchste Gewichtungsstufe zugeordnet. Dieser Gewichtung liegt die Erkenntnis zugrunde, dass die Betriebszeiten und Standzeiten für eine Prozesssicherheit in der Warenlogistikeinrichtung von höchster Bedeutung sind, da eine unzureichend aufgeladene Traktionsbatterie 8 die Arbeitsabläufe in der Warenlogistikeinrichtung verzögern würde. Die Zelltemperatur 70 ist wiederum von hoher Relevanz, da sie direkt mit der Beanspruchung der Traktionsbatterie 8 während des Aufladevorgang korreliert und somit durch eine Reduktion der maximal erreichten Zelltemperatur 70 die Lebenszeit der Traktionsbatterie 8 verlängert werden kann.

Nach der Durchführung der Gewichtung werden die Eingabegrößen mehreren Knotenpunkten 105 zur Verfügung gestellt. In Fig. 4 sind insgesamt fünf Knotenpunkte 105 dargestellt. Es können jedoch auch weniger oder mehr Knotenpunkte 105 vorgesehen sein. Die Knotenpunkte 105 bilden die verborgene Schicht des neuronalen Netzes 100 und sind darauf trainiert, aus den Nutzungsparametern 40 als Eingabegröße passende Ausgabegrößen am Ausgangsknoten 106 auszugeben. Als Ausgabegröße wird ein Ladevorgangsmodifikationsparameter 50 ausgegeben. Dieser Ladevorgangsmodifikationsparameter 50 kann beispielsweise die Information umfassen, dass der in Fig. 2a gezeigte Aufladevorgang so modifiziert werden sollte, dass der maximale Stromstärkenwert 22 verringert und die Ladedauer 24 erhöht wird. Aus diesem Ladevorgangsmodifikationsparameter 50 erzeugt die Verarbeitungseinheit 5 ein Steuersignal mit Steuerbefehlen, die an das Ladegerät 10 übermittelt werden. Durch die Steuerbefehle werden eine oder mehrere Ladevorgangskenngrößen 55, also beispielsweise der maximale Stromstärkenwert 22, und/oder die Ladedauer 24 angepasst, um den Aufladevorgang an die Nutzung des Flurförderzeugs 2 während des Arbeitstags zu optimieren.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Flurförderzeug
- 3: Fahrzeugsteuerung
- 4: Batteriemanagementsystem
- 5: Datenverarbeitungsvorrichtung
- 6: Datenspeicher
- 7: Ladesystem
- 8: Traktionsbatterie
- 10: Ladegerät
- 12: Ladekabel
- 21: Stromstärke
- 22: maximaler Stromstärkenwert
- 23: Zeit
- 24: Ladedauer
- 30: Standzeit
- 31: Anfangszeit
- 32: Endzeit
- 33: Betriebszeitzeit
- 40: Nutzungsparameter
- 50: Ladevorgangsmodifikationsparameter
- 55: Ladevorgangskenngröße
- 60: Zeitdauer
- 61: Zeitdauer
- 70: Zelltemperatur
- 80: Energiedurchsatz
- 90: zusätzlicher Nutzungsparameter
- 100: neuronales Netz
- 101 - 104: Eingangsknoten
- 105: Knotenpunkt
- 106: Ausgangsknoten

## Patentansprüche

1. Batteriemanagementsystem (4) eines Flurförderzeugs (2), umfassend einen Datenspeicher (6) und eine Verarbeitungseinheit (5), die dazu eingerichtet ist, einen Nutzungsdatensatz zu erfassen und im Datenspeicher (6) abzuspeichern, wobei der Nutzungsdatensatz eine Nutzung des Flurförderzeugs (2) während eines Arbeitszeitraums beschreibt, wobei der Nutzungsdatensatz wenigstens einen Nutzungsparameter (40) umfasst, der Aufschluss über Entladephasen und Ladephasen der Traktionsbatterie (8) während des Arbeitszeitraums gibt, wobei die Verarbeitungseinheit (5) ferner dazu eingerichtet ist, aus dem wenigstens einen Nutzungsparameter (40) einen Ladevorgangsmodifikationsparameter (50) zu ermitteln und während wenigstens eines Aufladevorgangs der Traktionsbatterie (8) wenigstens eine Ladevorgangskenngröße (55) basierend auf dem Ladevorgangsmodifikationsparameter (50) anzupassen, wobei die wenigstens eine Ladevorgangskenngröße (55) eine Energieaufnahme der Traktionsbatterie (8) während des Aufladevorgangs kennzeichnet.

2. Batteriemanagementsystem (4) nach Anspruch 1, **dadurch gekennzeichnet, dass** die Ladevorgangskenngröße (55) ein maximaler Stromstärkenwert (22) eines Ladestroms während des Aufladevorgangs und/oder eine Ladedauer (24) des Aufladevorgangs umfasst
und/oder dass der wenigstens eine Nutzungsparameter (40) eine Zeitdauer (60) von Betriebszeiten (33), während denen die Traktionsbatterie (8) entladen wird, und eine Zeitdauer (61) von Standzeiten (30), während denen die Traktionsbatterie (8) nicht entladen wird, umfasst, wobei der wenigstens eine Nutzungsparameter (40) insbesondere Anfangszeiten (31) und Endzeiten (32) der Betriebszeiten (33) und/oder Standzeiten (30) umfasst.

3. Batteriemanagementsystem (4) nach Anspruch 1 oder 2, wobei der wenigstens eine Nutzungsparameter (40) eine Zelltemperatur (70) umfasst, die wenigstens eine Zelle der Traktionsbatterie (8) während des Aufladevorgangs aufweist, wobei insbesondere für die wenigstens eine Zelle eine erste Temperaturschwelle im Datenspeicher (6) hinterlegt ist, die die wenigstens eine Zelle während des Aufladevorgangs nicht überschreiten darf, wobei die Verarbeitungseinheit (5) dazu eingerichtet ist, durch Anpassung der Ladevorgangskenngröße (55) während des Aufladevorgangs die Zelletemperatur (70) auf eine zweite Temperaturschwelle unterhalb der ersten Temperaturschwelle zu regeln.

4. Batteriemanagementsystem (4) nach einem der Ansprüche 1 bis 3, **dadurch gekennzeichnet, dass** der wenigstens eine Nutzungsparameter (40) einen oder mehrere der folgenden Parameter umfasst:
- einen Energiedurchsatz (80) der Traktionsbatterie (8),
- einen Leistungsverbrauch des Flurförderzeugs (2),
- eine Umgebungstemperatur um das Flurförderzeug (2),
- maximale, für die Traktionsbatterie (8) vorgegebene, Stromwerte,
- eine Kapazität der Traktionsbatterie (8),
- einen Kennwert für einen Alterungszustand der Traktionsbatterie (8),
- einen Kennwert für den Ladezustand der Traktionsbatterie (8) während des Arbeitszeitraums,
- einen Kennwert für den Ladezustand der Traktionsbatterie (8) nach Ende des Arbeitszeitraums
und/oder dass die Verarbeitungseinheit (5) dazu eingerichtet ist, bei der Ermittlung des Ladevorgangsmodifikationsparameters (50) einen gesamten Energiedurchsatz (80) von wenigstens zwei Flurförderzeugen (2) während des Arbeitszeitraums als Nutzungsparameter (40) zu berücksichtigen, wobei die wenigstens zwei Flurförderzeuge (2) das Flurförderzeug (2) umfassen
und/oder dass die Verarbeitungseinheit (5) dazu eingerichtet ist, den Ladevorgangsmodifikationsparameter (50) aus dem wenigstens einen Nutzungsparameter (40) mittels eines künstlichen neuronalen Netzes (100) zu ermitteln, wobei das künstliche neuronale Netz (100) darauf trainiert ist, den wenigstens einen Nutzungsparameter (40) als Eingabegröße zu empfangen und den Ladevorgangsmodifikationsparameter (50) als Ausgabegröße auszugeben.

5. Ladesystem (7) zum Laden einer Traktionsbatterie (8) eines Flurförderzeugs (2), umfassend ein Batteriemanagementsystem (4) nach einem der Ansprüche 1 bis 4 und ein Ladegerät.

6. Flurförderzeug (2) mit einer Traktionsbatterie (8) umfassend ein Batteriemanagementsystem (2) nach einem der Ansprüche 1 bis 4, wobei insbesondere die Traktionsbatterie (8) eine Lithium-Ionen-Batterie umfasst.

7. Verfahren zum Laden einer Traktionsbatterie (8) eines Flurförderzeugs (2), umfassend die folgenden Schritte:
- Erfassen eines Nutzungsdatensatzes und Speichern des Nutzungsdatensatzes in einem Datenspeicher (6) des Flurförderzeugs (2), wobei der Nutzungsdatensatz eine Nutzung des Flurförderzeugs (2) während eines Arbeitszeitraums beschreibt, wobei der Nutzungsdatensatz wenigstens einen Nutzungsparameter (40) umfasst, der Aufschluss über Entladephasen und Ladephasen der Traktionsbatterie (8) während des Arbeitszeitraums gibt,
- Ermitteln eines Ladevorgangsmodifikationsparameters (50) aus dem wenigstens einen Nutzungsparameter (40),
- Anpassen von wenigstens einer Ladevorgangskenngröße (55) basierend auf dem Ladevorgangsmodifikationsparameter (50) während wenigstens eines Aufladevorgangs der Traktionsbatterie (8), wobei die wenigstens eine Ladevorgangskenngröße (55) eine Energieaufnahme der Traktionsbatterie (8) während des Aufladevorgangs kennzeichnet.

8. Verfahren nach Anspruch 7, **dadurch gekennzeichnet, dass** die Ladevorgangskenngröße (55) ein maximaler Stromstärkenwert (22) eines Ladestroms und/oder eine Ladedauer (24) des Aufladevorgangs umfasst.

9. Verfahren nach Anspruch 7 oder 8, **dadurch gekennzeichnet, dass** der wenigstens eine Nutzungsparameter (40) eine Zeitdauer (60) von Betriebszeiten (33), während denen die Traktionsbatterie (8) entladen wird, und eine Zeitdauer (61) von Standzeiten (30), während denen die Traktionsbatterie (8) nicht entladen wird, umfasst, wobei der wenigstens eine Nutzungsparameter (40) insbesondere Anfangszeiten (31) und Endzeiten (32) der Betriebszeiten (33) und/oder Standzeiten (30) umfasst.

10. Verfahren nach einem der Ansprüche 7 bis 9, wobei der wenigstens eine Nutzungsparameter (40) eine Zelltemperatur (70) umfasst, die wenigstens eine Zelle der Traktionsbatterie (8) während des Aufladevorgangs aufweist, wobei insbesondere für die wenigstens eine Zelle eine erste Temperaturschwelle hinterlegt ist, die die wenigstens eine Zelle während des Aufladevorgangs nicht überschreiten darf, wobei durch Anpassung der Ladevorgangskenngröße (55) während des Aufladevorgangs die Zelletemperatur (70) auf eine zweite Temperaturschwelle unterhalb der ersten Temperaturschwelle geregelt wird.

11. Verfahren nach einem der Ansprüche 7 bis 10, **dadurch gekennzeichnet, dass** der wenigstens eine Nutzungsparameter (40) einen oder mehrere der folgenden Parameter umfasst:
- einen Energiedurchsatz (80) der Traktionsbatterie (8),
- einen Leistungsverbrauch des Flurförderzeugs (2),
- eine Umgebungstemperatur um das Flurförderzeug (2),
- maximale, für die Traktionsbatterie (8) vorgegebene, Stromwerte,
- eine Kapazität der Traktionsbatterie (8),
- einen Kennwert für einen Alterungszustand der Traktionsbatterie (8),
- einen Kennwert für den Ladezustand der Traktionsbatterie (8) während des Arbeitszeitraums,
- einen Kennwert für den Ladezustand der Traktionsbatterie (8) nach Ende des Arbeitszeitraums.

12. Verfahren nach einem der Ansprüche 7 bis 11, wobei der Nutzungsdatensatz mehrere Nutzungsparameter (40) umfasst, wobei bei der Ermittlung des Ladevorgangsmodifikationsparameters (50) den Nutzungsparametern (40) unterschiedliche Gewichtungsstufen zugeordnet werden.

13. Verfahren nach Anspruch 9 und Anspruch 12, wobei den Zeitdauern (60, 61) der Betriebszeiten (33) und der Standzeiten (30), sowie insbesondere der Anfangszeiten (31) und Endzeiten (32) der Betriebszeiten (33) und/oder der Standzeiten (30), eine höchste Gewichtungsstufe bei der Ermittlung des Ladevorgangsmodifikationsparameters (50) zugeordnet werden.

14. Verfahren nach Anspruch 10 und Anspruch 12, wobei der Zelltemperatur (70) eine zweithöchste Gewichtungsstufe bei der Ermittlung des Ladevorgangsmodifikationsparameters (50) zugeordnet wird.

15. Verfahren nach einem der Ansprüche 7 bis 14, **dadurch gekennzeichnet, dass** bei der Ermittlung des Ladevorgangsmodifikationsparameters (50) ein gesamter Energiedurchsatz (80) von wenigstens zwei Flurförderzeugen (2) während des Arbeitszeitraums als Nutzungsparameter (40) berücksichtigt wird, wobei die wenigstens zwei Flurförderzeuge (2) das Flurförderzeug (2) umfassen
und/oder dass die Ladevorgangskenngröße (55) während des Aufladevorgangs auf einen Maximalwert gesetzt wird, sofern kein sich in mehreren Arbeitszeiträumen wiederholendes Nutzungsverhalten des Flurförderzeugs (2) erfasst werden kann
und/oder dass während eines ersten Arbeitszeitraums die Ladevorgangskenngröße (55) auf einen Maximalwert gesetzt wird, wobei nach dem ersten Arbeitszeitraum der Ladevorgangsmodifikationsparameter (50) für nachfolgende Arbeitszeiträume schrittweise geändert wird, um die Ladevorgangskenngröße (55) anzupassen, bis eine Energieaufnahme der Traktionsbatterie (8) während aller Aufladevorgänge des nachfolgenden Arbeitszeitraums an das Nutzungsverhalten des Flurförderzeugs (2) angepasst ist
und/oder dass der Ladevorgangsmodifikationsparameter (50) aus dem wenigstens einen Nutzungsparameter (40) mittels eines künstlichen neuronalen Netzes (100) ermittelt wird, wobei das künstliche neuronale Netz (100) darauf trainiert ist, den wenigstens einen Nutzungsparameter (40) als Eingabegröße zu empfangen und den Ladevorgangsmodifikationsparameter (50) als Ausgabegröße auszugeben.
